# EUROPEAN PATENT SPECIFICATION

(11) **EP 3 463 763 B1**
(45) Date of publication and mention of the grant of the patent: **03.06.2020**
(21) Application number: 17729419.6
(22) Date of filing: 31.05.2017
(51) Int. Cl.: B25H 7/00, B25H 7/02

(54) **TOOL FOR TRANSFERRING POSITIONS OF MEASUREMENT REFERENCES**
INSTRUMENT ZUM ÜBERTRAGEN VON MESSREFERENZPOSITIONEN
OUTIL DE TRANSFERT DE POSITIONS DE RÉFÉRENCES DE MESURE

(30) Priority: 31.05.2016 NO 20160926
(43) Date of publication of application: 10.04.2019
(73) Proprietor: Solberg, Dan, 4635 Kristiansand S (NO)
(72) Inventor: Solberg, Dan, 4635 Kristiansand S (NO)
(74) Representative: Protector IP AS
(86) International application number: PCT/EP2017/063123
(87) International publication number: WO 2017/207612

(56) References cited:
- CA-A1- 2 553 999
- FR-A1- 2 843 795
- GB-A- 2 463 259
- US-A- 4 212 110
- US-A- 5 922 157
- US-A1- 2004 078 990
- US-B1- 7 891 108

## Description

### Technical Field

The present invention relates to a tool for transferring positions of measuring references from a construction frame to a surface lining, such as a board, as defined in the preamble of the subsequent claim 1 or 9.

### Prior art and background of the invention

There exist many solutions for measuring accurate positions on a planar surface.

US 637373 describes a framing square for use in carpentry. It consists of a set of rulers of which some form a frame and at least one can be set at different angles relative to the frame. Thereby the square can be used in different ways to measure workpieces.

US 2529939 describes a similar carpentry measurement frame with rulers that can be set at different angles for determining cutting angles of workpieces.

None of the two above tools is suitable for measuring the position of outlets or the like in a wall.

US 4228592 also describes a carpenter measuring tool that can be used to measure the position of cut-outs in a panel. It comprises a slider that runs on a T-square. The slider can be positioned over an outlet and the slider has an opening with markings indicating standard cut-out sizes. In one embodiment the tool has only one T-square and in another embodiment the tool has two T-squares set at right angles.

In the embodiment with only one T-square it is possible to measure only one of the two necessary directions at a time. Even with two T-squares the apparatus is very cumbersome to use, especially for one person only. Only one cut-out can be measures at a time and care must be taken to measure the various object relative to the same lines (floor, ceiling, corner etc.).

US 1417753 describes a plotter with a rectangular frame and two crossing rulers within the frame. The rulers can slide relative to the frame and one another. The device is intended to be used to plot lines and the like on a sheet of paper.

US 3672064 describes an apparatus for indexing cut-outs to be formed in a panel with respect to objects and fixtures in the wall. It comprises two arms that are set at right angles to one another. Each arm can be extended from a box arranged at their crossing point. The box contains pins that are to be placed on the outside or inside of the object that a cut-out has to be made for. After the box has been placed over the object, the arms are extended to the floor or the corner of the room and fastened in that position. The apparatus is then placed in a proper position on the panel and a cone on the backside of the box is pressed into the panel to mark the centre of the cut-out.

This device is very cumbersome to use. It is difficult, if possible at all, for one person to use it, as the box has to be held in place on top of the object as the two arms are extended to the correct extension. Only one cut-out can be measured at a time and care must be taken to measure the various object relative to the same lines (floor, ceiling, corner etc.).

US 5222303 describes a template for marking the position of junction boxes or the like. It consists of a fixed rectangle with an aperture that is larger than the junction box. An arm is fixed to the rectangle. The arm has a fixed length or has a portion that is linked to the fixed length arm or attached by a serration that can be broken off.

The template is for marking the correct height in placement of junction boxes. It is therefore not suitable for use to determine the position of already installed junction boxes. It can only determine the position in one direction and is therefore unsuitable for measuring the position of junction boxes in two dimensions.

US 5309642 describes a mat marking apparatus. It comprises a ruler that is to be placed against the edge of the mat. A T-square is slidable along the ruler. A cutting unit is slidable along the T-square. The cutting unit has a cutting knife and an aperture for a pencil.

The apparatus is very cumbersome to use on a wall, especially for one person alone. If used on a wall, it can only measure the position of one object at a time and care must be taken to measure the various object relative to the same lines (floor, ceiling, corner etc.).

US 2007/0193049 describes a craft board assembly comprising a rectangular frame with a ruler that can slide on the frame. The device is for creating lines on a self-healing mat or a piece of paper.

This device is unsuitable of measuring the positions of outlets in a wall.

It has been noticed that in practical situations, the tool used by carpenters is almost exclusively a simple folding ruler or a measuring tape. This means that, for example, when fitting surface boards on a wall having electrical outlets or water outlets, the tradesman must first measure the distance from the floor and up to the centre of the outlet that a cut-out is to be made for (alternatively from the ceiling) and then measure the distance from where one edge of the surface board is to be placed to the centre of the outlet. Both these measurements have to be written down on a piece of paper (unless the apprentice has confidence in his short time memory). Then the same measurements have to be measured on a surface board and a pencil mark has to be made. It is vital that the distance is measured from the correct edge of the board. Any errors here may result in the surface board having to be discarded and the process has to be repeated.

It is not uncommon that the cut-out turns out to be a mirror image or inverted of what it is supposed to be. This can be acceptable if the board can be turned inside out or around, but that is mostly not possible, for example if the two sides of the board are non-identical in terms of surface finish, or such.

If the measurement is done with insufficient accuracy, the board will not fit over the measuring reference, such as an outlet. Then the board has to be removed and the cut-out expanded until it fits the measuring reference. This is time consuming and it often results in a too large cut-out that may have to be patched up later. In many cases the board has to be discarded due to measurement errors.

Even if the measurements are correctly transferred to the board, the commonly used method is still time consuming. If a similar process has to be repeated on multiple boards that require similar cut-outs, the method has to be repeated for each and every board and for each cut-out that has to be made in the same board.

US 7891108 describes a marking device comprising a frame and a mesh. The frame and mesh are permanently attached to each other. The mesh is made of metal, alloy or galvanized steel to which magnets may be attached. The magnets are used to mark the position of outlets or the like relative to the mesh.

Since the parts of the marking device are permanently attached to each other, the marking device may have only a limited size. A larger size would be very difficult to transport from one building site to another.

The disadvantage of a small size marking device is that only one or very few outlets can be marked on the mesh at a time. If an outlet placed at, for instance, the middle portion of the wall is to be marked, the frame distance relative to the floor or the ceiling has to be measured. When the frame is then placed on the wall lining, it must be placed at the same distance from the lower or upper edge of the lining. Consequently, measurement errors may occur.

US 7 891 108 discloses a device for making where to locate and to cut the opening for a utility box, windows, panels or other openings on a sheet of building material. It comprises a metal wire mesh screen mounted to or within a rigid peripheral frame and a magnetic template, which mimics the size of the opening to be cut or the object to be measured. This template is magnetically or removably attached to the planar or flat wire mesh screen and aligned with a mounted utility box. Once the flat magnet or template is appropriately placed on the first surface or area to be measured, the marking device is placed upon the second surface or on the sheet of building material, and the user can trace the location of the opening to be cut using a pen, pencil or other marking implement.

This known device is a one part rigid frame. It cannot be made too large as this would prevent transportation and moving the frame from room to room. US 5 922 157 shows a flexible grid structure. This is intended for a different purpose than the present invention.

Other know devices are shown in FR 2843795, US 4212110, CA 2553999, US 2004/078990 AND GB 2463259.

Consequently, there is a need for a more accurate and quicker method of transferring the positions of the measuring references.

### Objects of the invention

In the foregoing description and hereinafter are used general terms that are to be understood as follows:
Construction frame: A vertical, horizontal or inclined construction frame, such as building framework forming parts of a wall, ceiling or floor structure or bulkheads in ships or similar, onto which a surface lining is to be attached.

Reference surface: A surface defined by said construction frame. The surface lining coincides with the reference surface when attached to the construction frame.

Surface lining: Any lining to be attached to a construction frame, such as plasterboards, plywood boards, compressed wood fibre sheets, metal sheets, sheets made from composites, tiles, etc.

Measuring reference: Any objects that needs to be marked and cut out for in said surface lining, or to just define its position in the a reference surface defined by said construction frame, such as electrical junction boxes, water supply/sewage points, windows, doors, openings, wall hung toilets/basins, etc.

When examples falling within the definition of any of the above terms are used, these should be understood to encompass all possible embodiments within the above terms.

It is a primary object of the invention to provide a tool for transferring accurately and effectively the positions the measuring references from a construction frame to a surface lining.

It is also an object of the invention to transfer simultaneously sizes and shapes of the measuring references from the construction frame to the surface lining.

It is also an object of the invention to facilitate the transfer without the user needing to know the measurement values.

It is also an object of the invention that the transfer of positions takes place in a fail-safe manner where reference lines or other markings are clear and cannot be confused.

It is also an object of the invention to provide a tool that can easily be used by a single person, without help from another person.

It is also an object of the invention to provide a tool that can be used to transfer the positions of at least one and preferably several measuring references in one operation.

It is also an object of the invention to provide a tool that can cover a large proportion of a wall height, preferably from floor to ceiling.

Lastly, it is an object of the invention to provide a tool that is easy to transport from one building site to the next.

These and other objects are achieved by the features recited in the features of the accompanying independent claim.

### Detailed description of preferred embodiments of the invention

The invention will now be described in detail with reference to the accompanying drawings, illustrating the invention by way of examples. The examples are showing panelling of an inner wall by using boards, but it should be understood that the devices and methods of the invention may conveniently be adapted for the use on ceilings, floors, outer walls and roof of buildings and for other constructions, such as ship interiors, i.e. any construction that is to be covered with boards, panels or other covering material.
FIG. 1 shows a room where the proposed invention may be applied.
FIG. 2 shows the room together with an embodiment of the present invention.
FIG. 3 illustrates the room and the present invention in use.
FIG. 4 illustrates the room and the present invention in use in a further step.
FIG. 5 illustrates the use of the device of the present invention while markings are transferred to a wall board.
FIG. 6 illustrates transfer of markings in a further step.
FIG. 7 shows an alternative embodiment of the present invention.
FIG. 8 shows a further alternative embodiment of the present invention.
FIG. 9 shows another further embodiment of the present invention.
FIG. 10 shows a preferred embodiment of the present invention in perspective view.
FIG. 11 shows a corner of the embodiment of FIG. 10 in planar view.
FIG. 12 shows the same corner as in FIG. 11, but in perspective view.
FIG. 13 shows the same corner as in FIGs 11-12, but from an opposite side.
FIG 14 shows a cross section of the device of the invention.
FIG. 15A shows a cross section of a construction element of the device of the invention.
FIG. 15B shows a cross section of the element of FIG 15A with additional components in a first state.
FIG 15C shows a cross section of the element of FIG 15A with additional components in a second state.
FIG. 16A shows a corner section of the device of the present invention.
FIG 16B shows the corner section of FIG. 16A in disassembled state.
FIG. 17 shows an extension element in a partially assembled state.
FIG. 18 shows the extension element of FIG. 17 in a partially disassembled state.
FIG. 19 shows the extension element of FIG. 18 as seen from an opposite side.
FIG. 20 shows a detail of the extension element.

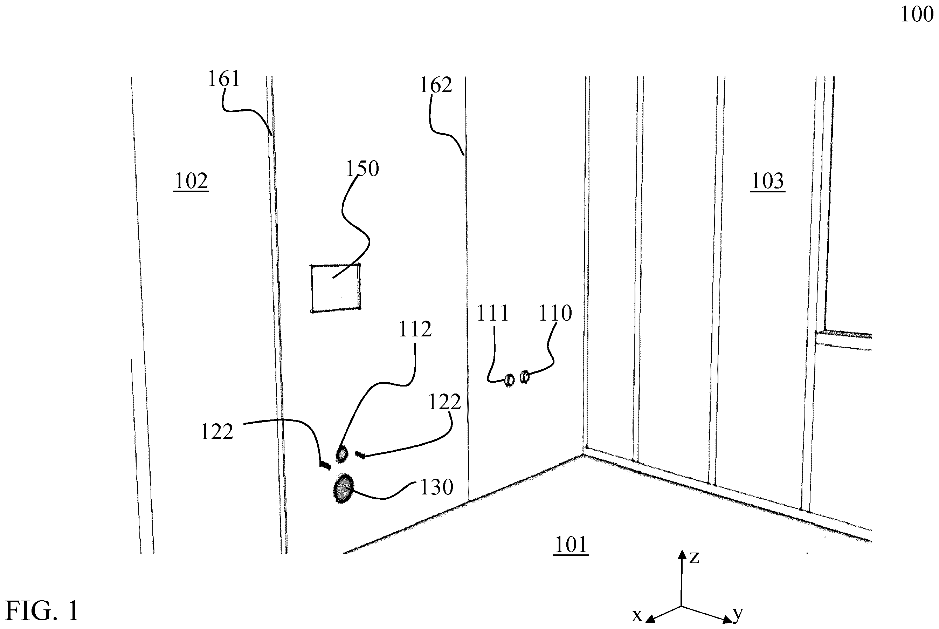

FIG. 1 illustrates a room 100 comprising walls 102 and 103, and floor 101. Said room is under construction in a building. Axes x, y and z are shown to represent the 3-dimensional layout of the room 100. The wall 102 has been partly panelled and a plurality of reference positions (e.g., 110, 111, 112, 122, 130 and 150) as well as vertical studs, such as 161 and 162 (hidden) are shown. The wall 102 may for example have outlets for electrical connections, water supply, drainage, etc. In FIG. 1 three water outlets are shown, outlets 110 and 111 may for example, be for cold and hot water respectively, to be coupled to fittings for water supply to, e.g., a shower, bathtub, or a wash basin. Water outlet 112 is for example, for connection to a toilet bowl to be mounted by wall pegs 122. Outlet 130 to be connected to the outlet of the toilet bowl and is a connection to sewage or drainage. Outlet 150 is for example for a wall mount control panel for a concealed cistern for the toilet seat.

As the wall 102 is about to be lined with surface boards, such as gypsum boards or fibre building boards, it is then necessary to make cut-outs that will fit over the reference positions or outlets.

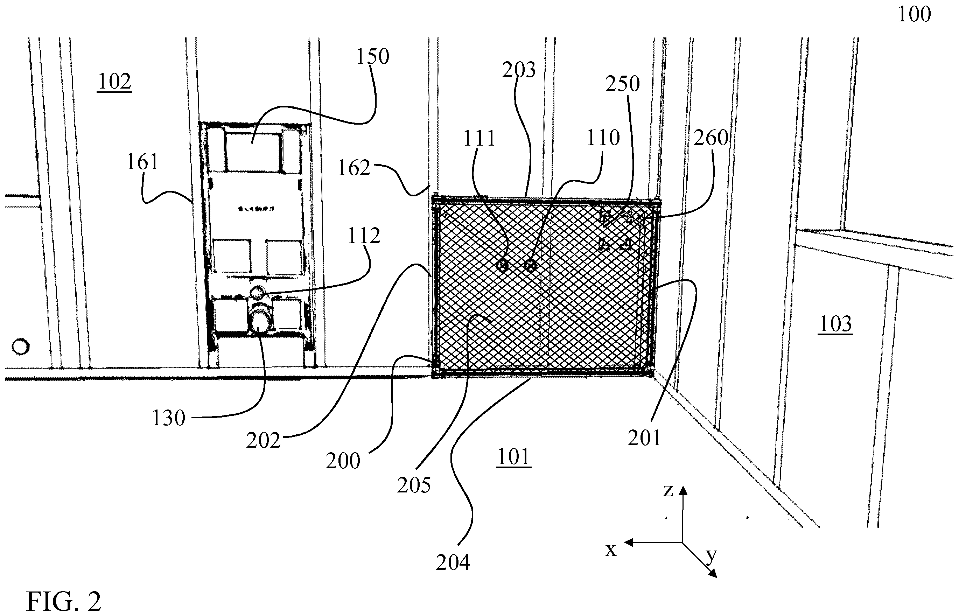

FIG. 2 shows another view of the room 100, now before panelling is commenced, and also showing a tool according to the present invention. According to the invention, the tool comprises a frame 200. The frame 200 preferably has a width corresponding to the width of a lining board. Alternatively, the frame width can be slightly larger than the width of the lining board. By frame width, it is meant here the dimension of the frame 200 along the x-axis as shown in FIG. 2. The height of the frame 200 is preferably shorter than the length of the board, so that the frame is easy to move around under the ceiling. By height of the frame, it is meant here the dimension of the frame 200 along the z-axis as shown in FIG. 2. The frame 200 preferably has four longitudinal elements 201, 202, 203 and 204, that constitute the four sides of the frame 200. Within the frame is a marking grid 205 that can be realized in different forms as exemplified in some of the embodiments of the present invention in the further description. The grid 205 is shown as a net in diamond pattern in FIG. 2. However, the grid is most conveniently made up of squares with sides that are parallel with the sides of the frame. Furthermore, as shown in FIG. 2, outlets 110 and 111 are visible through the grid 205. For marking positions of references, or outlets, on the grid 205, templates can be attached to the grid. FIG. 2 also shows two templates, a rectangular one 250, and a circular one 260 attached on the grid 205.

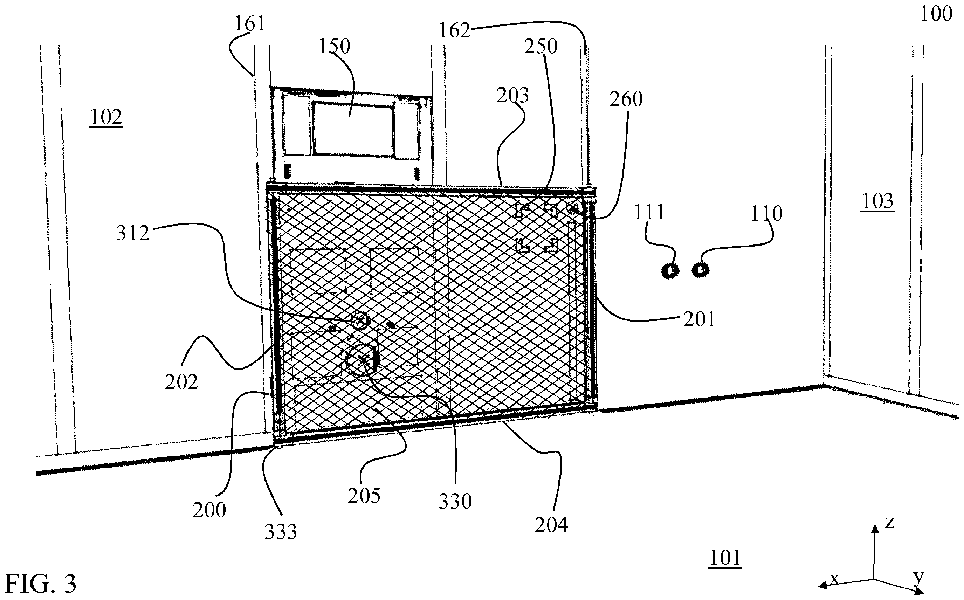

FIG. 3 shows yet another view of the room 100, with the frame 200 now moved to a first position so as to mark or record the positions of the outlets 112 and 130 on the grid 205. The frame 200 is aligned between the vertical studs 161 and 162 such that it essentially aligns in a 2-dimensional plane where a lining board will be installed. Specifically in FIG. 3, the corner 333 i.e., intersection between bottom element 204 and left vertical element 202 of frame 200 has been aligned at the intersection between the floor 101 and the vertical stud 161. In addition, if necessary, the frame may be levelled with respect to the ground or floor 101. Said alignment may be done for example, by aligning the corner 333 of the frame 200 with the designated position on the wall 102 of the respective corner of the relevant lining board. In other words, a convenient position on a 2D plane can be used to align the frame on the wall such that the frame can be easily and unambiguously aligned to the lining board for transferring the reference positions from the grid 205 to the respective board. FIG. 3 further shows two circular templates, 312 and 330, that have been placed by the user to mark or record the positions of the outlets 112 and 130 respectively on the grid 205.

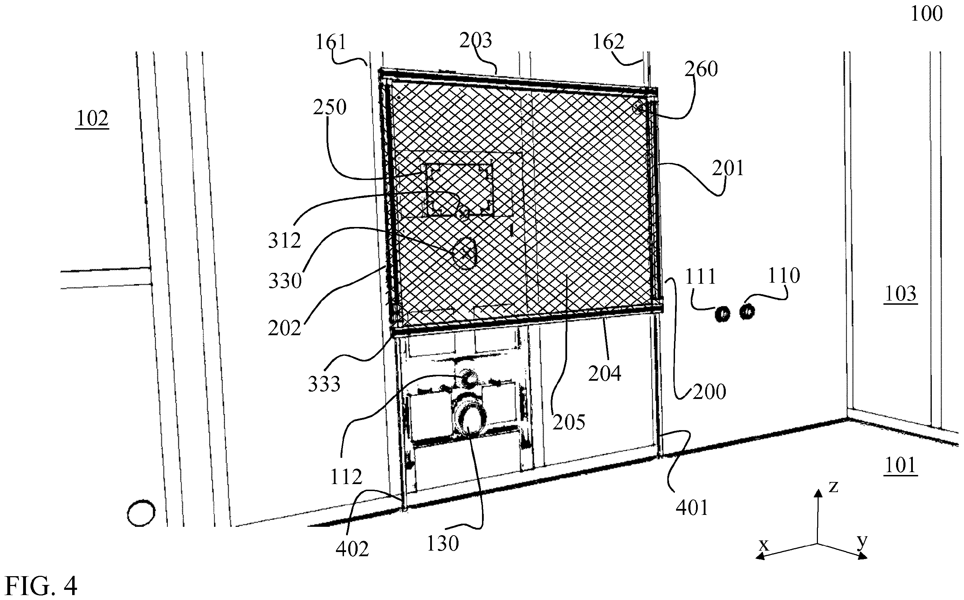

FIG. 4 shows yet another view of the room 100, where the frame 200 has now been moved to a second position so as to mark or record the positions of the outlet 150 on the grid 205. In this case, the frame 200 has been lifted above the floor 101 by using adjustable legs or extension elements 401 and 402 that may be in the form of screws or telescopic elements housed within the vertical elements 201 and 202 respectively of the frame 200. In addition, the frame is checked, and if necessary, levelled with respect to the ground or floor 101. The templates 312 and 330 that recorded the positions of outlets 112 and 130 respectively are still in place. Now, the rectangular template 250 is moved and attached to the grid 205 such that it marks the position of the outlet 150 on the grid.

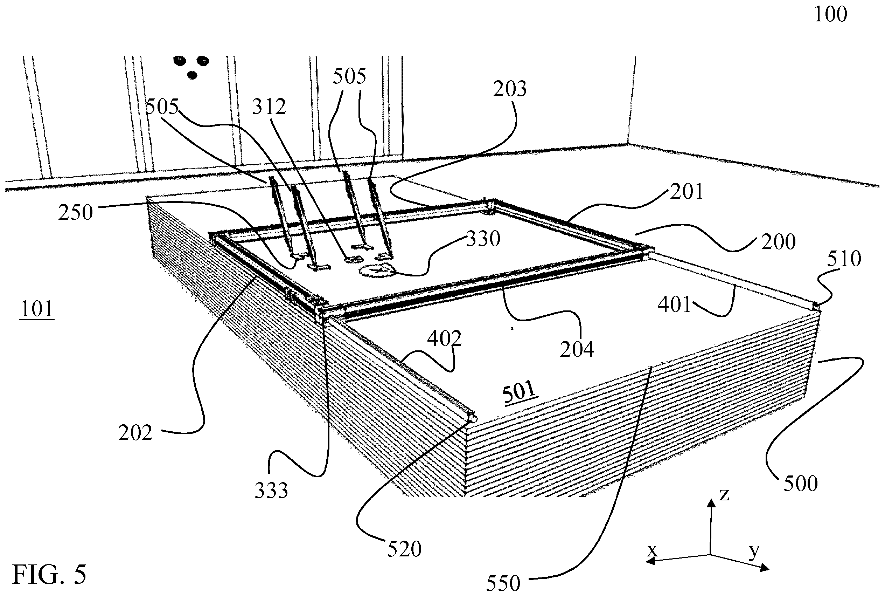

FIG.5 shows the frame 200 now resting on top of a stack of boards 500. The stack of boards 500 is shown lying on the floor 101. The board 501 on the top of the stack 500 is to be lined between vertical studs 161 and 162 (not visible in FIG. 5, but shown in FIG. 4), so cut-outs need to be made at correct positions on the board 501 for respective outlets. In a conventional scenario, the user will measure the outlet positions on the wall, write them or memorize them or write down the measurements on a piece of paper, and then repeat measurements on the respective board that will be lined over the wall section comprising said outlets. If the positions are incorrectly marked, the board may become unsuitable for use, moreover, the conventional process requires taking multiple measurements. In contrast, the present invention in its simplest sense obviates the requirement of measurements. The user uses the grid 205 for recording actual positions of the outlets - the grid then serves as a sort of stencil for transferring the recorded actual positions of the outlets on the respective board or a plurality of boards. The process is thus highly simplified and the probability of human errors significantly reduced. A process of transferring the recorded positions on a board 501 is demonstrated in FIG. 5. The frame 200 has been removed from the wall 102 (shown only partly in FIG. 5) and placed on the board 501. The user may do a simple alignment for example by aligning the end points 510 and 520 of the adjustable legs or extension elements 401 and 402 respectively with the bottom edge 550 of the board 501 and a side edge of the frame with a side edge of the board. By bottom edge here it is meant that the edge of the board 501 that will be closest to the floor 101 when the board 501 is lined at its designated position on the wall 102. After simple alignment, the user may proceed to transfer the positions on the board. In FIG. 5, four marking instruments 505 are shown that are being used to transfer the position of the rectangular template 250 on the surface of the board 501, thus marking the four corners of the rectangular outlet 150 on the board 501. The grid 205 is not shown visible in FIG. 5 for the sake simplicity and for clarity of the templates and marking. Furthermore, the four marking instruments 505 may in reality be a single instrument that is used for marking each corner one at a time. Possible embodiments of the marking instrument 505 include, pen, pencil, stamp, other ink based instruments, a cutting tool such as blade, sharp tipped chisel, and their likes.

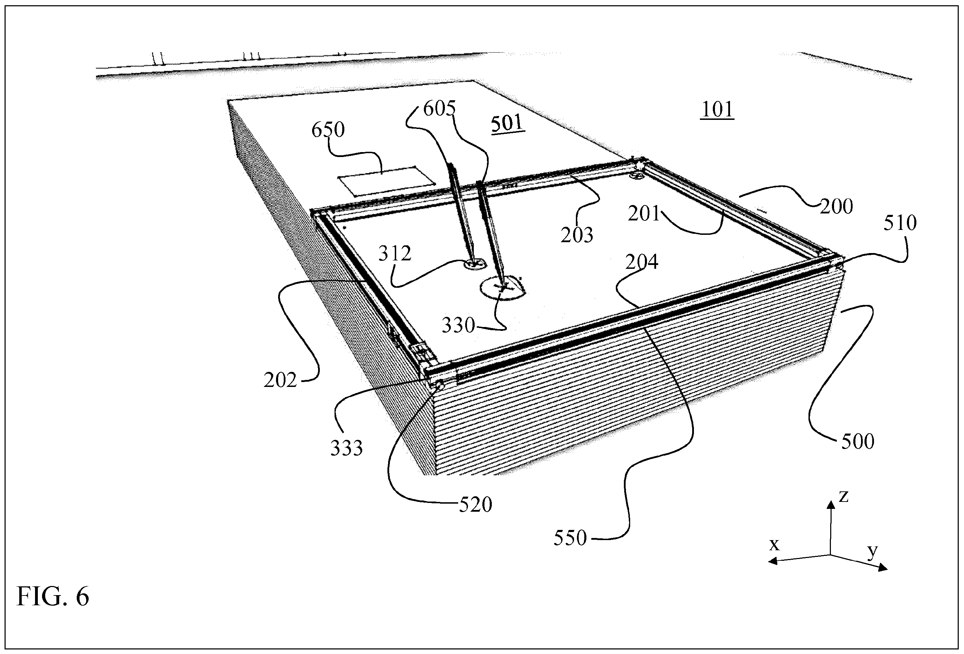

FIG. 6 shows a process now for transferring markings of outlet positions that are closer to the floor 101. Here, the extension elements 401 and 402 (not visible in FIG. 6) are now retracted within their respective frame elements 201 and 202. The frame 200 is thus moved closer to the bottom edge 550 of the board 501. The board 501 is still on the top of the stack 500.For transferring the positions of outlets 112 and 130 (not visible in FIG. 6), the user may first check the alignment of the frame 200 with respect to the board 501, and adjust if necessary. The alignment is relatively simple and has already been explained above. In simple terms, the user may need just to check that the end points 510 and 520 align with the bottom edge 550 of the board 501. After verifying this simple alignment, the user may proceed to transfer the positions on the board.

In FIG. 6, two marking instruments 605 are shown that are being used to transfer the position of the circular templates 312 and 330 on the surface of the board 501, thus marking, for example, the centre positions and periphery or diameter of the circular outlets 112 and 130 on the board 501. The grid 205 is shown not visible in FIG. 6 for the sake simplicity and for clarity of the templates and markings. Furthermore, the two marking instruments 605 may in reality be a single instrument that is used for marking each template one at a time. Possible embodiments of the marking instrument 605 include, pen, pencil, stamp, other ink based instruments, a cutting tool such as blade, sharp tipped chisel, and their likes. The instruments 605 can be the same instrument 505 in FIG. 5. FIG. 6 also shows a rectangular marking 650 generated by the user for outlet 150 as explained in FIG. 5 - the respective template 250 may then be removed from the grid 205 if no further markings for the outlet 150 are needed on other boards. By using the process as explained in the preceding figures, the frame 200 need not be as high as the height of the board. By height it is meant here the dimensions of the frame along the z-axis as shown in the preceding figures when the frame mounted on the wall, e.g., 102 as shown for example in FIG. 3. Similar denotation applies for the board, i.e., the dimension of the board in the z-axis as shown in the figures when the board has been lined on the wall, e.g., 102 with the board's largest surface facing the wall.

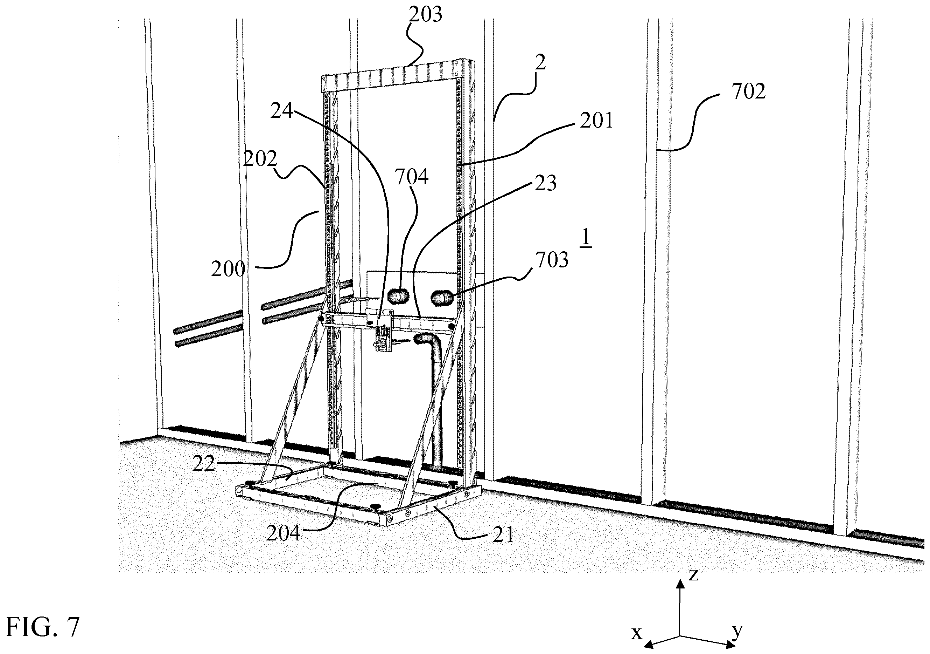

FIG. 7 shows further an embodiment of the invention, the tool comprising a frame 200. The frame 200 preferably has a width corresponding to the width of a lining board. By width it is meant here the dimensions along the y-axis when the frame 200 or the board is placed as intended. Alternatively, the frame width can be slightly larger than the width of the lining board. The height of the frame 200 is preferably shorter than the height of the board, so that the frame is easy to move around under the ceiling. Height of the board means the dimension of the board along the z-axis when the board is when mounted on the wall as intended. Alternatively, the frame may comprise a collapsing or folding mechanism that aids in easy deployment, removal, and redeployment of the frame along the wall. The frame 200 preferably has adjustable legs for height adjustment. Consequently, the frame 200 might be of a height that is about half the board height and the extension legs can be used to position the frame at the height of the outlets 703, 704 on a wall 1.

The frame 200 preferably has four longitudinal elements 201, 202, 203 and 204, that constitute the four sides of the frame 200. Within the frame is a marking grid 205 (not visible in FIG.7 for the sake of simplicity) that in all embodiments of the frame as such can be realized, for example, as:
A net attached to the frame. The net has warp and weft threads with a surface upon which it is possible to make removable markings with a felt pen, stamp, ink spray or the likes. A sheet with holes punched therethrough may also be used instead of a net with warp and weft threads.

A net attached to the frame that is made of a magnetic fibre material, magnetic metal, magnetic threads, wires or their likes, or be covered by a magnetic paint. In this embodiment, templates that are magnetic may be used to mark positions. In yet another embodiment the magnetic fibres, wires, or such may be coated with or encapsulated within a second material such as plastic or rubber. The second material may then aid the attachment of the templates on the surface of the net. In another embodiment, the second material is such that it aids the attachment of also non-magnetic templates on the net. Some examples for materials aiding the attachment of non-magnetic templates are, Velcro®, sticky materials such as removable glue, soft rubber or silicone, or a combination of different materials that can attach or stick to each other. In yet another embodiment, the second materiel is of such nature that it also allows the use of markings such as ink spray, pen, stamp and their likes. By said nature, it is meant that the surface of the second material is preferable light in colour such that marking made by a pen, stamp or such is easily visible, and that the surface is preferably glossy such that ink based markings may be easily removed without trace when needed.

A plurality of lasers emitter attached to the elements of the frame. The lasers emitters are arranged such that they emit laser beams preferably intersecting each other at a right angle such that the intersection of two laser beams marks a position of a measuring reference. In another embodiment, the laser beams may be of different colours to distinguish separate measuring references. In yet another embodiment, the frame also comprises a series or an array of sensors arranged along the periphery of the frame for detecting a position of a surface reference. The sensors are further functionally coupled to an electronic unit. In this embodiment, the user or tradesman may use a pointing device to mark the position of the surface reference. Said pointing device is further functionally connected to said electronic unit. The functional connection between the pointing device and the electronic unit may be a wired connection, or a wireless connection, or even an optical link, or any other communications medium. In one embodiment, when the user places the pointing device at a certain position located within the plane of width and height of the frame, and then presses a button on the pointing device, the array of sensors registers the position as pointed by the pointing device. The frame then projects the intersecting laser beams at said position to mark the position as registered by the sensors. The electronic unit also comprises a memory unit to save the registered positions. The electronic unit is also capable of registering a plurality of positions, and is able to project multiple laser beams to mark different positions of marked references on the same surface. The electronic unit is further capable of storing positions for different surfaces, for example as different file-names, with a capability to recall each of said different settings when needed. The user is also able to sort, edit, rename, or delete said settings for different surfaces. In yet another embodiment, the electronic unit is contained within the frame, also comprises a portable power unit such as a battery.

The embodiments of the grid 205 will be further explained below with specific examples.

Within the frame is attached a grid 205, for example, in the form of a net. The net has warp and weft threads extending in right angles to each other. The spacing between the threads may vary, but should preferably be in the order of 1 - 10 mm, most conveniently 5 - 10 mm. The thickness of the threads should be in the order of 0.3 - 1 mm. This provides an optimal sizing with respect to both putting markings on the threads and transferring the markings to the board, as will be described in detail below.

The net can be made of a variety of materials, such as metal wire, plastic, Kevlar®, carbon fibre, glass fibre and natural fibres. The threads should preferably have a smooth surface. The threads may be covered with a coating, such as paint or plastic, e.g. poly urethane. When using a pen, ink stamp or similar devices for marking the surface of the net, the colour should be bright enough so that such markings are visible, but dark enough so that remains of wiped out markings do not stand out and easily are mistaken for valid markings. It has been found that a grey colour is suitable. More generally, the colour of the thread surface should have good contrast with respect to the ink of the pen or other such instrument, which is being used to make the markings. Also, the thread surface should be such that the ink or other marking medium may be removed without leaving visible traces when needed.

The thread material should have at least some resistant to sharp objects to avoid accidental damaged. Nevertheless, the net should preferably be flexible enough to be rolled up if it is detached from the frame.

Instead of a net made up of weft and warp threads, it can also be made of a sheet material, such as a plastic sheet, with punched out holes in a raster pattern.

In an alternative embodiment, the net is made of a magnetic metal or made of any of the above-mentioned materials and also comprising a magnetic material, for example, coated with a magnetic paint. Such paints are readily available on the market. Alternatively, the net is made of a magnetic material such as iron wires, and said wires are coated with any of the above-mentioned materials. The functioning of a magnetic net will be explained below.

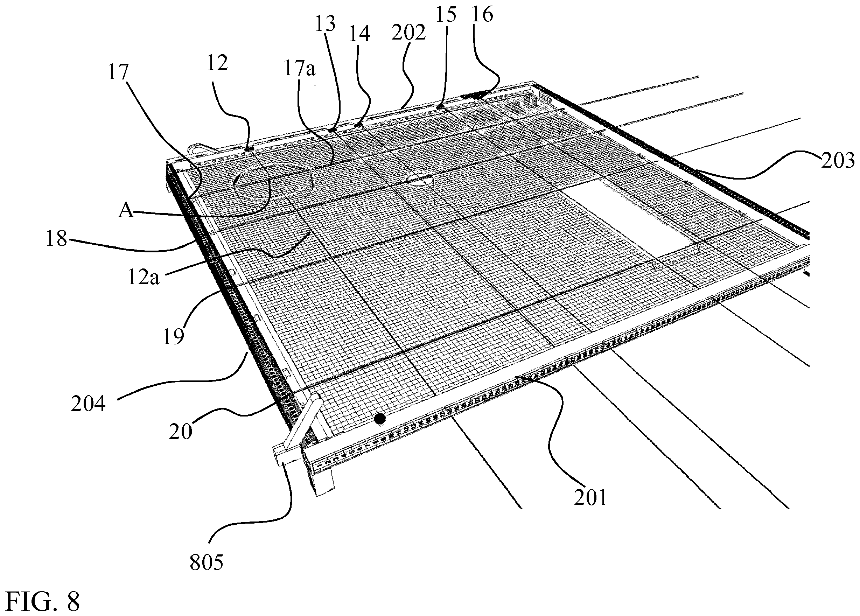

A further alternative embodiment is shown in FIG. 8. Small laser emitters 12 - 20 are attached to at least two of the frame elements 202, 204. Said laser emitters may be slidably attached to the frame. In another embodiment, the laser emitter is able to alter the direction of projection of the laser beam. Some of the emitters 12 - 16 are on the frame element 202 that is to be oriented vertically along the surface and some of the emitters 17 - 20 are on the frame element 204 that is to be oriented horizontally along the surface, for measuring a reference position. Preferably, the emitters are detachable, so that they can be moved, according to need, between the horizontal and vertical frame elements, for example elements 202, 204. The embodiment of FIG. 8 may also comprise adjustable legs or extension elements. Also shown in FIG. 8 is ha holder 805 for a tool, such as a knife.

When one emitter 12 on the vertical element 202 is lit and one element 17 on the horizontal element 204 is lit, the two laser beams 12a and 17a will intersect at a point A.

It is an advantage if the beams of the lasers have different colours, so that different intersections of laser beams are of different colours.

When the tool is being used, the frame is put up against the wall in the same position as the panel board is intended to be in. At least one of the vertical frame elements 201, 202 is aligned with the vertical corner of the room or with another board that is already attached in the place next to where the board going to be mounted.

Then, if necessary, the extension legs are adjusted so that the horizontal elements 203, 204 are essentially horizontal and the vertical elements likewise are aligned essentially vertical. To facilitate this, at least one of the frame elements 201 - 204, preferably the bottom element, may be equipped with a level, such as a bubble-level. Alternatively, at least one of the laser emitters can be configured as a level, or even a dedicated laser level is included.

After adjustment or alignment, the centre point of the reference positions, such as outlets are marked on the 2-dimensional plane encompassed within the frame elements 201 - 204. In addition to the centre position, the outer circumference of the outlets may also be marked. Depending on the embodiment, the marking can be performed as follows:

### A net attached to the frame:

The tradesman or user, for example, a carpenter, may use a felt pen or an ink stamp of the retractable type, such as the one described in US4392425. These types of stamps can be produced in small quantities with any desired printing surface, such as a cross that can be stamped on to the net, the middle of the cross designating the centre point of the outlet.

To aid the carpenter in positioning the markings, he may be provided with templates of various sizes and shapes that he can hold against the net over the outlet. The template may have cut-outs through which the carpenter can mark the net. Optionally, the templates may be provided with non-permanent adhesive, such as the type used on Post-It® notes. The templates can then act as markings themselves.

### A net attached to the frame that is made of a magnetic metal or covered by a magnetic paint:

In this embodiment the carpenter may be provided with templates that can be magnetically attached on the net for marking or recording the positions of the outlets. The magnetic templates can be of various sizes and shapes. The magnetic templates may also have cut-outs, as will be explained later.

### A plurality of lasers attached to the elements of the frame:

The carpenter will turn on a first laser emitter and position the laser emitter along the associated element, e.g., a vertical element 202, until the laser beam points or crosses essentially at the centre position of an outlet. Then he will position a second laser emitter attached to a horizontal element e.g., 204 until the laser beam of this second laser emitter also crosses the centre position of the outlet. As a person skilled in the art will understand, the two beams, i.e., the beam from the first emitter and the beam from the second emitter, will intersect at the centre of the outlet at nearly right angle.

This process is repeated with other laser emitters until the centre positions of all the outlets have been marked.

Then the user or carpenter removes the frame from the wall and places it on top of a surface lining. Said surface lining is usually meant to be installed at essentially the same position where the 2-dimensinal area of the frame was aligned for marking. The only thing that the user must be particular about when placing the frame, is that the element (e.g., 202) that was aligned with a wall, a room corner, or with a neighbouring surface lining or board has to be placed along an edge of the board to be marked such that the lowermost horizontal element (e.g., 204), or the outer end of the extension legs, are positioned at the edge of the board that is to face the floor.

The user is then ready to transfer the markings from the frame to the surface lining or board. If multiple boards need to be placed at different locations that require similar markings, the user can use the same frame to transfer the markings to each of the multiple boards.

In the embodiments having nets, whether it is a magnetic embodiment of the frame or not, the net should preferably lie full face against the board such that a felt pen or such may be used for the transfer of markings. For performing a transfer, an instrument such as a felt tip pen may be used to draw or trace a second marking on top of the marking that was made for on the net for recording the position of a reference position on the net, or, if the marking was recorded as placement of a magnetic template, transferring second marking through the cut-out in the magnetic template or along the circumference of the magnetic template. For an embodiment with a non-magnetic net, a retractable ink stamp may be also used also for the transfer. The second marking will then be performed on the board through the openings between the threads of the net whilst the net is lying facing against the board.

For embodiments with a laser type frame, the laser emitters are positioned so that the laser beams can propagate parallel to the surface of the board where the reference positions are to be marked. The beams are arranged to travel a short distance above said surface of the board. The second markings may be made, for example, with a felt pen or an ink stamp on the board at or around the position where the intersecting laser beams cross. In a configuration, where the frame includes a first plurality of laser emitters emitting horizontal laser beams along the horizontal elements and a second plurality of laser emitters emitting vertical laser beams along the vertical elements, each of the horizontal laser beams will cross each of the vertical laser beams. As a result, each beam crossing may not correspond to a marked outlet or position. The carpenter must therefore take care to mark the board at the valid crossings. To facilitate this, one or more of the first and second pluralities of laser emitters beams may configured to emit a beam of a pre-determined colour, such that, for example, only crossings of laser beams of the same colour indicates a valid crossing, or a marked position.

When the above has been done, the second marking is also performed, the user may cut out the openings on the board where the second marking has been placed. This is done in a conventional way, for example, by a hole saw, a compass saw, or other ways.

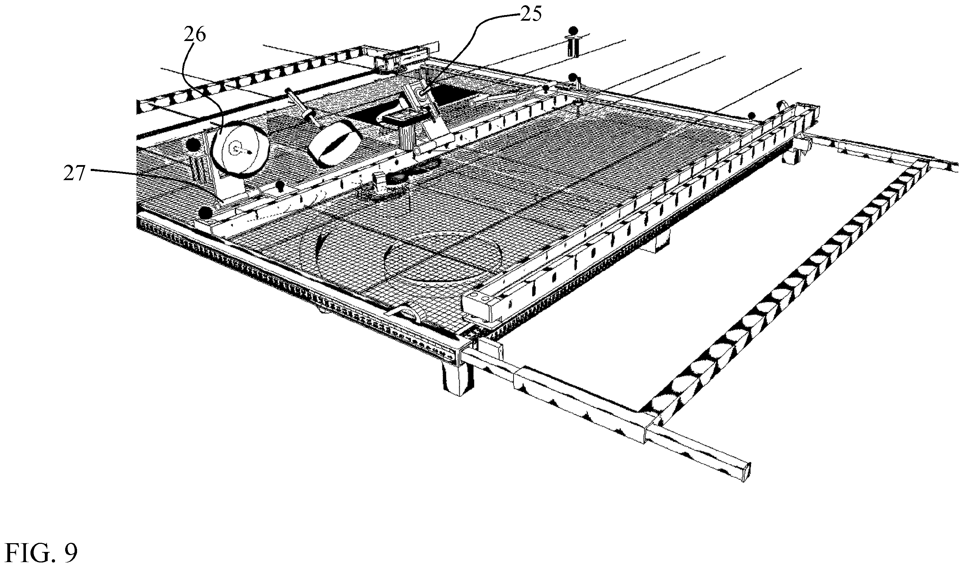

Now referring to FIG. 9 and FIG. 7, in another embodiment, for example, if a net is not used, the frame can also be equipped with one or more rulers 23 that can move along two opposite frame elements 201, 202. On the ruler 23 is arranged one or more sliders 24 or such that can move along the ruler 23. On the slider 24 may be mounted a marking tool 25, such as a pen or a sharp pointed instrument.

The slider may also be equipped with a hole saw 26. Thereby the, slider can be moved to the place of the marking, such as by laser beams, and a cut-out be taken out directly without the need to transfer marks to the board. If the frame is equipped with several moveable rulers and sliders, hole saws can be positioned directly on the outlet without the use of laser beams. As shown in FIG. 9, the slider may be equipped with a hinge 27, so that the marking tool 25 or the hole saw 26 can be swung into and out of action.

In another embodiment, the ruler and the slider are functionally coupled to an electronic unit. When the ruler and the slider are brought in the position of a reference point, the user is able to store the positions of the rule and the slider into an electronic memory, for example, by pressing a button. The user is able to store multiple positions in the electronic memory, for example, by using one or more buttons or a user interface. To transfer a position to a board, the user recalls the stored positions from the electronic memory, for example by selecting from one or more buttons or the interactive user interface, the electronic means then guides the user to the stored position either by displaying the stored position as a target, direction of the stored position location with respect to the current position of the scale and the slider. In one embodiment, the electronic means informs the user when the current position of the ruler or the slider comes within a predetermined range of the target position. By predetermined here it is meant that the current position is essentially equal to the target position, given the tolerances and specified accuracy of the frame. In yet another embodiment, at least one of the scale or the slider are operatively coupled to one or more electric motors. The electric motor related to the ruler is able to move the ruler along the corresponding frame elements 201, 202 to which the ruler is coupled. Similarly, the electric motor related to the slider is able to move the slider along the length of the ruler. In one embodiment, the user is able to control each of the motors by a joystick or buttons. In another embodiment, the electronic unit also comprises a computational unit and sensors that are able to align the positions of the ruler and the slider to the target position that is recalled by the user from the electronic memory. As a person skilled in the art will appreciate, said motors may be stepper motors or such, where the amount of movement of said motors can be controlled by electrical pulses. Alternatives can be sensors such as rotational sensors, positional encoders and/or linear position sensors.

In another embodiment, the user is able to store positions for different boards.

In a preferred embodiment, the frame preferably has the same width as a standard surface lining, such as 1200 mm width. The height may be smaller to make the frame easier to handle. However, it is preferred if the frame covers the height range of the predominant number of outlets. Thereby all outlets coinciding with a board can be marked without having to shift the frame between the wall and board and back again.
As an alternative embodiment, the tool can also be provided in a smaller or low-cost versions for the DIY market.

For conventional building and renovation, the frame will preferably be rectangular, but it is also conceivable to have a frame that is adapted for use in environments with non-straight angles or other geometrical shapes.

In yet another embodiment, the frame 200 may also be equipped with a stand 21, e.g. FIG. 7, so that the user can perform the marking without having to hold the frame. The foot of the stand can be equipped with adjustment screws 22 to level the stand 21 and hence the frame 200.

The frame 200 may be provided with holders for pens (such as shown at 805 in figure 8), ink stamps, knives or other types of tools such as saws that may be used in conjunction with the frame.

In one embodiment, the net may be permanently fixed to the frame elements 201 - 204, but it is more preferable and convenient if the net is detachable. The attachment may be achieved by clips, clamps, hooks, pegs, magnetic (if the net is magnetic), friction, Velcro® type, clasping mechanism, e.g., zipper, or adhesive.

In another embodiment, the frame elements 201 - 204 may be permanently fixed to each other, but it is more preferable and convenient if they are separable or foldable. Then the grid 205 or net can be rolled up and the elements detached for easier storage and transport.

A simple tool according to the invention can also comprise a frame-like structure comprising of only two elements set at right angles. The grid or net may be spanned between the two elements or several laser emitters may be attached slidable to the elements. The two elements may be detachable or foldable, when the tool is not in use.

Now further discussion will mainly relate to some of the preferred embodiments of the proposed tool.

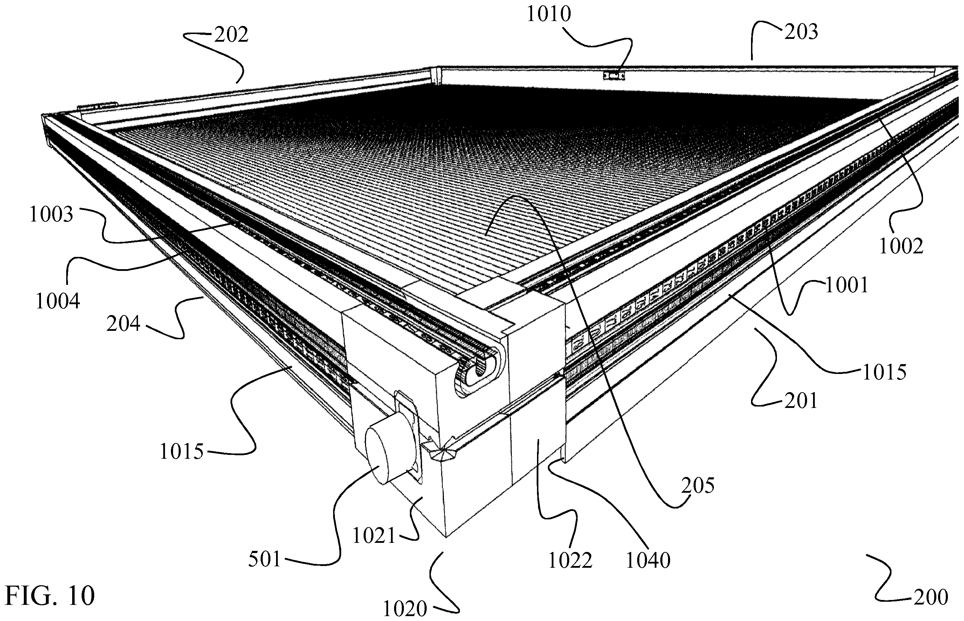

FIG. 10 shows a preferred embodiment of the tool according to the present invention. The visible surface of the grid 205 is the surface preferably used for marking, i.e., this is the surface that will be facing the user when the frame 200 is mounted on a wall for recording the reference positions, or when the frame is placed on a board for transferring the marked positions. End point 501 of one of the extension elements 401 (not visible in FIG. 10 as the element 401 is retracted within the frame element 201) is visible in the figure. Preferably, said end points 501 and 502 are screw type adjustment elements, or adjustment screws for adjusting the height of the frame above the ground or floor 101. Said adjustment screw 501 is housed within a corresponding corner 1020 of the frame 200.

The corner 1020 preferably comprises two detachable elements 1021 and 1022 for easy assembly and dismantling of the frame 200. The side elements 201 - 204 of the frame 200 preferably comprise a similar construction element 1015. The construction element 1015 is discussed later. The construction element 1015 also has channels for installing at least one ruler. In FIG. 10, several rulers 1001 - 1004 are shown facing the top and the sides of the frame 200. These rulers 1001 - 1004 may for example be used for alignment, adjustment of height, measurements, etc. The figure also shows a level installed in the bottom element 203 of the frame 200. The figure also shows a guide edge 1040 installed in one of the construction elements 1015. Said guide edge 1040 can for example be used for aligning an edge of the board to be in parallel to the frame element 204. Said guide 1040 may also be used for setting a reference point for measurements, for example, with ruler 1003 or 1004.

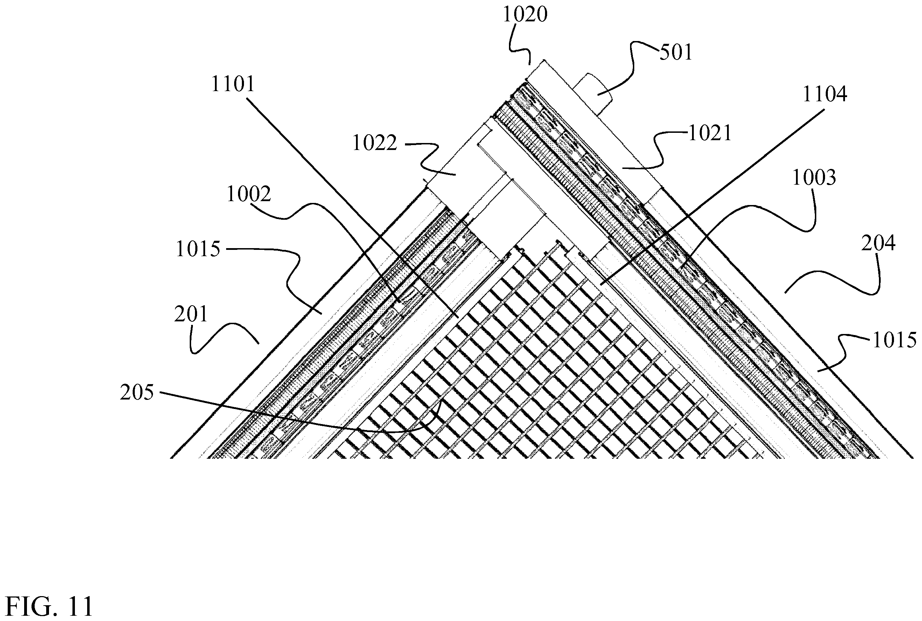

FIG. 11 is a zoomed in view of the frame 200 shown in FIG. 10 centered essentially around one of the corners 1020 of the frame 200. The grid 205 is shown in the form of a net. Each of the edges of the net 205 are preferably attached to a strip such that the strip can be used to mount the net 205 securely and tautly within the frame elements 201 - 204. In FIG. 11, strips 1101 and 1104 corresponding to the edges of the net 205 attached towards frame elements 201 and 204 are visible. In the shown embodiment, the strip is attached using the construction elements 1015, so the strip necessarily ends as the construction elements 1015 meet their respective corner elements 1021 and 1022. In a preferable embodiment, each strip has an outer edge that is larger in thickness as compared to the inner edge of the strip. By inner edge it is meant the edge of the strip that is attached to the grid 205. The outer edge of the strip is the edge that is farthest away from the closest edge of the grid when said grid is lying flat and unfolded. Said thick outer edge is used for attaching the strip its designated construction element 1015. Further details will be discussed later in the following embodiments.

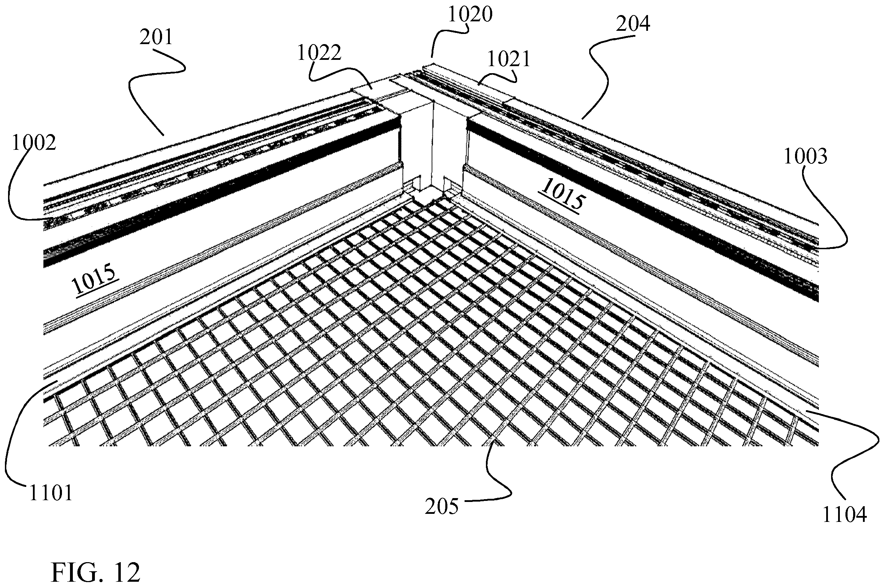

FIG. 12 is an alternative angle of the view shown in FIG. 11. The figure shows coupling between the corner elements 1021 and 1022 that form the corner 1020. The figure also shows the coupling between the constructions elements 1015 and their respective corner elements.

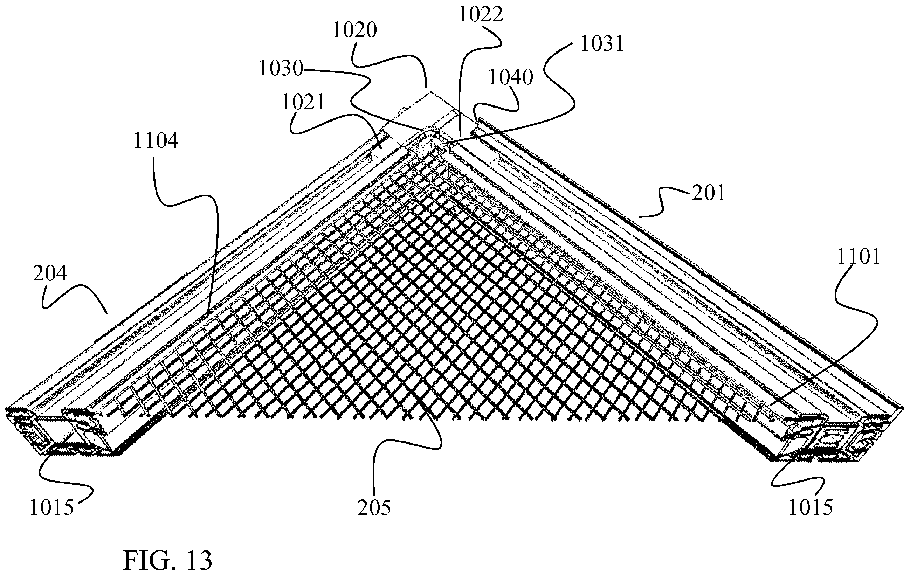

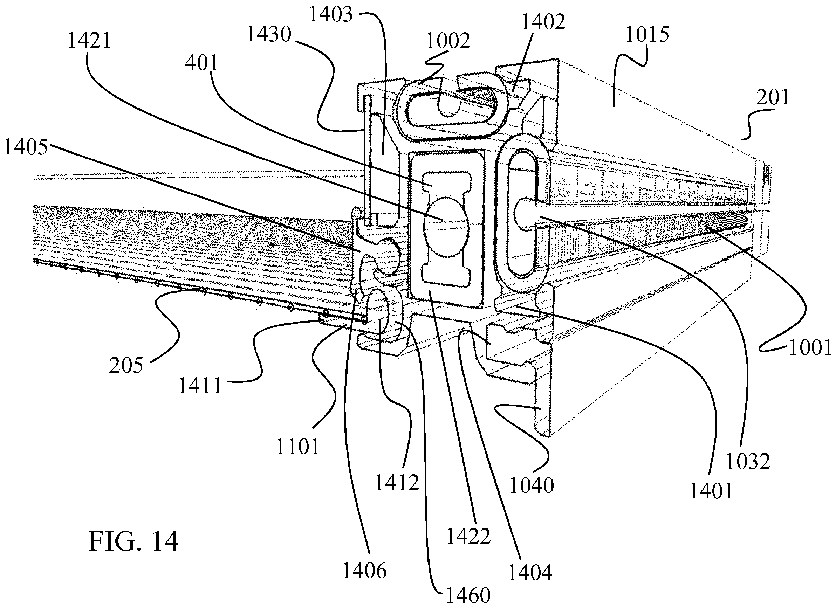

As shown in figures 13 and 14, the net 205 has a bead at the outer edge 1412 of the outer strip 1101. The bead extends around the perimeter of the net 205. A bracing wire 1031 may be embedded in the bead.

Fig. 13 shows the opposite side to that shown in FIG. 12. In other words, the frame 200 is reversed to show the surface that faces the wall when the frame 200 is deployed in the intended manner to record the positions of the outlets on a wall. The same surface will rest towards a board when making transfer of markings on the board. The figure also reveals a sectional view of the construction elements 1015. An important feature of the corner elements 1021, 1022 is the arched groove 1030. This groove 1030 receives the outer edge or bead 1412 with the bracing wire 1031, which extends around the perimeter of the net 205. The bracing wire is embedded in the strip 1101 at the side edges of the net 205.

By forcing the bracing wire 1031 into the grooves at the corners 1020 of the frame, the net 205 will be tightened evenly and to a predetermined degree. The corner grooves 1030 will hold the net 205 in place until the locking elements 1405 have engaged the strips 1101.

FIG. 14 shows more clearly a sectional view of a typical construction element 1015 that has been assembled with various other components to construct the frame 200. The construction element essentially forms most of the length the side elements of 201 - 204. As the sectional view reveals, the construction element 1015 comprises a plurality of channels running along its length. Said channels are used for housing various components of the tool. Most of these components are slide fitted into their designated channels, but some components may also be fitted using other means such as snap fitted, clamped, or clasped. Now referring to specific channels shown in the figure; side ruler channel 1401 is a channel for housing the side ruler 1001, top ruler channel 1402 is used for housing the top ruler 1002, inner channel 1403 is used for housing reinforcing plate 1430. Said inner channel may be used for attaching level, laser emitters, sensors, or other components to the tool. Lower outer channel 1404 is used for attaching guide edge 1040 at the side element 201. The construction element 1015 also includes a channel for installing a locking element 1405 for attaching grid 205 within the frame 200. The locking element 1405 has an edge 1406 that is engaged for retaining the outer edge or bead 1412 of the strip 1101 within a channel 1460 in the construction element 1015 such that the grid 205 is held tautly in place when the corresponding locking elements of all four sides 201 - 204 of the frame are engaged. The channel 1460 has inner dimensions larger than the outer dimensions of the outer edge 1412 such that said outer edge may easily be introduced or removed from the channel 1460 if the locking element 1405 is disengaged. The locking element 1405 is disengaged by swiveling the locking edge 1406 away from the outer edge 1412 of the strip 1101, such that the outer edge 1412 is no longer blocked by the locking edge 1406 and the outer edge 1412 may be removed from the channel 1460. The strip 1101 is preferably securely and permanently attached with the grid 205 along the inner edge 1411 of the strip. Preferably, the outer edge 1412 of the strip is sufficiently thicker in dimensions as compared to the inner edge 1411 such that the outer edge may be securely retained within the channel 1460 when the locking element 1405 is in engaged position.

In another embodiment, the inner edge comprises a beading running along the length of the strip. Located essentially at the middle of the cross section of the construction element 1015 is a channel that houses an extension element 401. The extension element further comprises an essentially rectangular structure 1422 that further houses an adjustment screw assembly 1421. The details related to said adjustment screw assembly will follow in further discussions. In other embodiments, said essentially rectangular structure 1422 may also have other geometrical cross-sections such as hexagonal, elliptical, circular with fins, or even triangular. The shape may be selected for example based upon ease of manufacture, material, costs, etc.

The rulers 1001 and 1001 may extend into the corner elements 1021 and 1022, as shown in FIGs 10-12.

The rulers 1001 and 1001 may have a groove 1032 for attaching levels, laser emitters, sensors, curve templets, secondary rulers, rails and arms, holders for knives, pens etc., or other components to the tool.

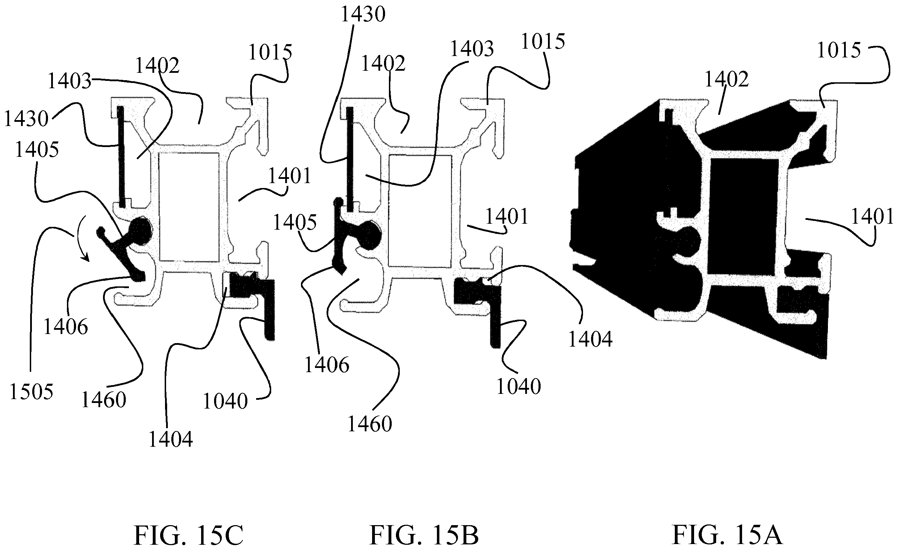

FIGs. 15A - C show more specifically cross-sectional views of the construction element 1015. FIG. 15A is a general 3-dimensional view of the construction element 1015. In FIGs. 15B and C, some additional components are also shown as related to the construction element 1015. The first is the guide edge 1040 fitted in channel 1404. The channel 1404 provides a play for the guide edge 1040. The play is equal to the thickness of the guide edge 1040 so that an inner measurement can be transferred accurately to an outer measurement.

Second, a reinforcement plate 1430 is shown placed in channel 1403. Third, the locking element 1405 is shown in a disengaged position in FIG. 15B, and the locking element is shown in an engaged position in FIG. 15C. The engaged position is achieved by swiveling the locking element 1405 such that the locking edge 1406 moves towards the inside of the channel 1460, as indicated roughly by the direction of the arrow 1505 in FIG. 15C. When engaged, the outer edge of the designated strip is retained within the channel by the locking edge 1406. A spring element (not shown) or equivalent is forcing the locking edge into the engaged position.

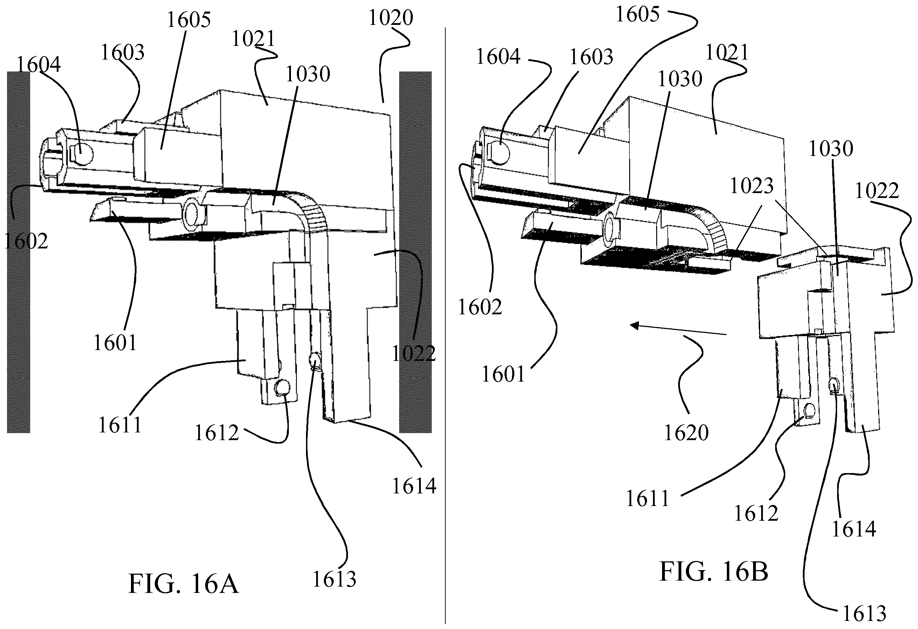

FIGs. 16A and B show an embodiment of the corner section 1020. The corner section 1020 comprises two parts 1021 and 1022 that couple with each other via a dovetail joint 1023. Coupling process is shown in FIG. 16B by attaching the two parts as shown by the arrow 1620. Both corner parts 1021 and 1022 comprise a plurality of tabs e.g., 1601 - 1605, and 1611 - 1614 that couple with the respective construction elements 1015. In FIGs 16A and B is also shown the groove 1030 for the bead 1412 with the bracing wire 1031. The view of the corner section 1020 as shown in FIG. 16B, when further assembled together with the construction elements 1015 and grid 205, the corner will look as shown in FIG. 13.

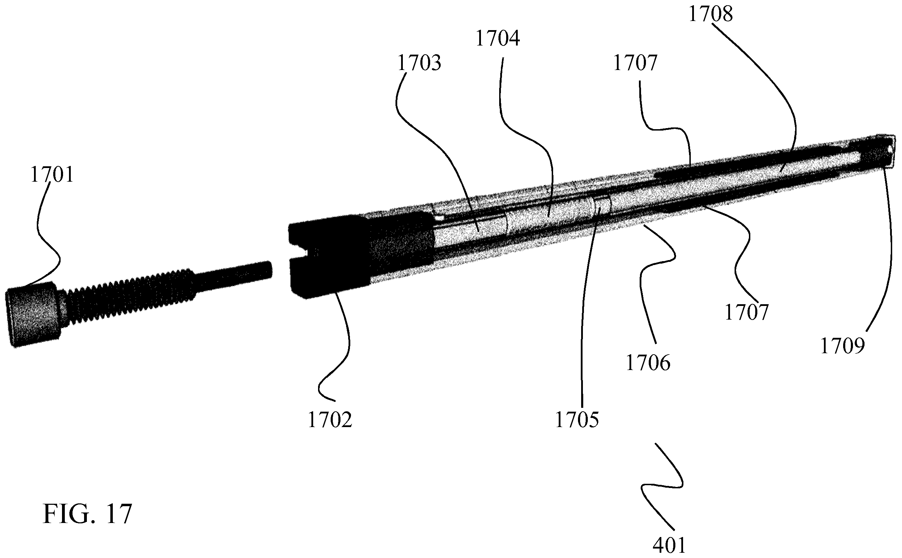

Now specific embodiments of the extension element 401 will be discussed. FIG. 17 shows an embodiment of an extension element assembly 401, which can be used for adjusting the height of the proposed tool. The reference number 401 is selected as an example such that the person skilled in the art may relate where the proposed assembly can be applied - the reference number 401 or even 402 are hence not a limitation in any way to an application of the proposed extension assembly. The proposed assembly 401 comprises an adjustment screw 1701 that operatively fits into a threaded screw sleeve 1702. The threaded screw sleeve 1702 is coupled to an upper sleeve 1703 that retains a spring 1704. The spring is held in position by the upper sleeve 1703 and a lower sleeve 1705. The section after the lower sleeve is a steel pipe 1708 that is further connected to an adjustment foot 1709. Most of the assembly is housed within a channel 1706. The assembly, it is fitted with spring steel plates 1707. These press on the steel pipe to retain the pipe in position. When coarse adjustment of the extensions is desired, the user grips the outer end of the extension assembly and pulls it outwards (alternatively pushes it inwards) until approximately the desired extension is reached. Then fine adjustment may be done by using the adjustment screw 1701.

The fine adjustment works as follows, when the adjustment screw 1701 is operated a resultant force is transferred from the upper sleeve 1703 to the spring 1704, which results in an equivalent movement of the steel pipe 1708 and the further attached adjustment foot.

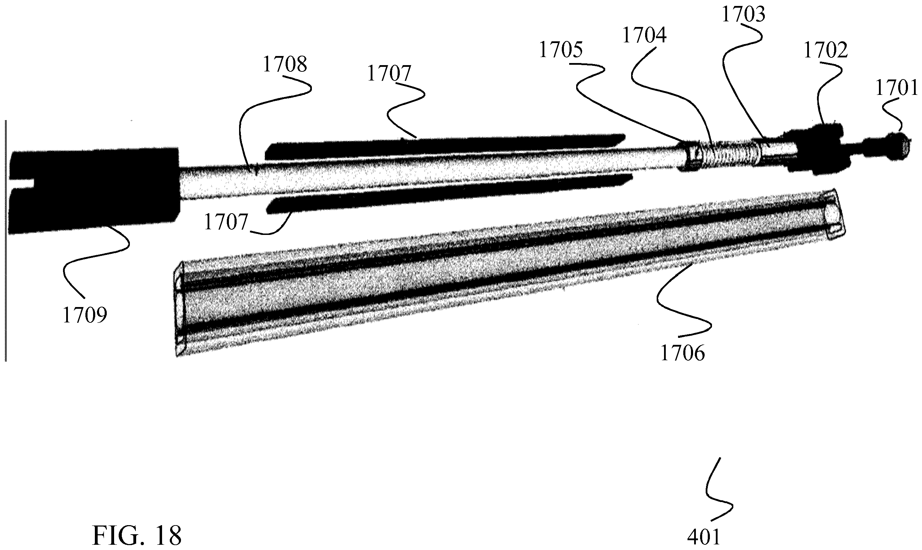

FIG. 18 shows an exploded view of the assembly 401 as seen from the other side, i.e, from the adjustment foot 1709 side.

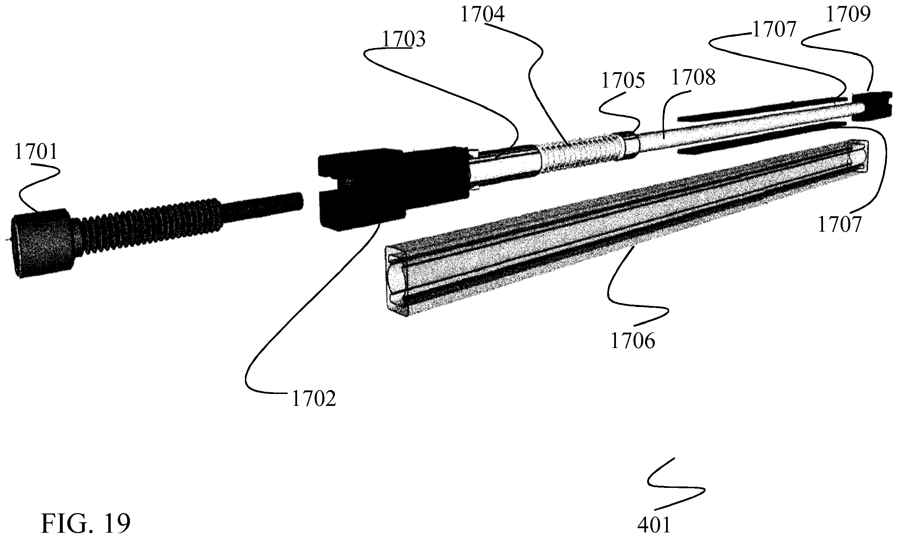

FIG. 19 shows an exploded view of the assembly 401 as seen again from the adjustment screw 1701 side.

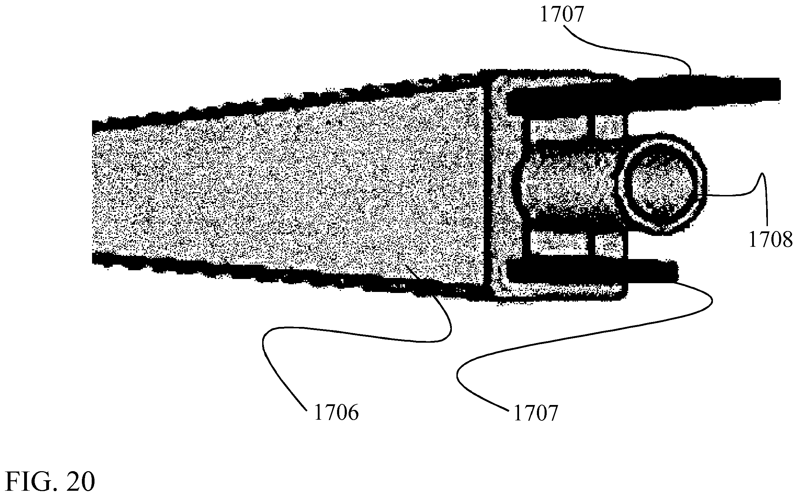

FIG. 20 shows a closer view of the channel 1706 for the assembly 401.

## Claims

1. A tool (200) for transferring positions of measuring references from a construction frame to a surface lining (501) for making cut-outs in the surface lining (501) for said measuring references; said tool comprising a frame-like structure and a grid structure (205) having openings in a raster pattern; said grid structure (205) being spanned between elements (201, 202, 203 and 204) of the frame-like structure, **characterised in that** said frame-like structure comprises elongate elements (201, 202, 203 and 204) that are attachable and detachable by hand from each other at the corners (333) of said frame-like structure, that said grid structure (205) is attachable and detachable by hand from said frame-like structure, and that said grid structure (205) is flexible in such a degree that it can be rolled up by hand.

2. The tool of claim 1, **characterised in that** said grid structure (205) is detachably attached to said frame-like structure by clips, clamps, hooks, pegs, magnetism, friction, hook and loop, such as Velcro®, clasping mechanism, such as zipper, or adhesive.

3. The tool of claims 1 or 2, **characterised in that** said longitudinal elements (201, 202, 203 and 204) are coupled to each other by a respective corner section (1020), said corner section being two-part, said parts (1021, 1022) of said corner section (1020) being attachable and detachable from one-another by a dovetail joint (1023).

4. The tool of claims 1, 2 or 3, **characterised in that** said grid structure (205) comprises a bead (1412) running along the circumference of said grid structure (205), said longitudinal elements (201, 202, 203 and 204) and said corner sections (1020) having a groove (1030) receiving said bead (1412), and said longitudinal elements (201, 202, 203 and 204) having locking elements (1405) retaining said bead (1412) within said groove (1030).

5. The tool of any of the preceding claims, **characterised in that** said grid structure (205) is a net comprising warp and weft threads.

6. The tool of any of the preceding claims, **characterised in that** the surface of the grid structure (205) is smooth.

7. The tool of any of the preceding claims, **characterised in that** said grid structure (205) comprises a magnetic material.

8. The tool of claim 7, **characterised in that** it comprises at least one magnet template for attachment on said magnetic grid structure (205).

9. The tool of any of the preceding claims, **characterised in that** the surface of the grid is writable by e.g. felt pen, ink pen or pencil.

## Patentansprüche

1. Instrument (200) zum Übertragen von Positionen von Messreferenzen von einem Konstruktionsrahmen auf eine Oberflächenverkleidung (501) zum Herstellen von Ausschnitten in der Oberflächenverkleidung (501) für die Messreferenzen; wobei das Instrument eine rahmenartige Struktur und eine Gitterstruktur (205) mit Öffnungen in einem Rastermuster umfasst; wobei die Gitterstruktur (205) zwischen Elementen (201, 202, 203 und 204) der rahmenartigen Struktur aufgespannt ist, **dadurch gekennzeichnet, dass** die rahmenartige Struktur längliche Elemente (201, 202, 203 und 204) umfasst, die an den Ecken (333) der rahmenartigen Struktur von Hand anbringbar und abnehmbar sind, dass die Gitterstruktur (205) von Hand an der rahmenartigen Struktur anbringbar und von der rahmenartigen Struktur abnehmbar ist, und dass die Gitterstruktur (205) in einem solchen Ausmaß biegsam ist, dass sie von Hand aufgerollt werden kann.

2. Instrument nach Anspruch 1, **dadurch gekennzeichnet, dass** die Gitterstruktur (205) an der rahmenartigen Struktur durch Klammern, Klemmen, Haken, Stifte, Magnetismus, Reibung, Klettverschluss, wie z.B. Velcro®, Klemmmechanismus, wie z.B. Reißverschluss, oder Klebstoff lösbar befestigt ist.

3. Instrument nach Anspruch 1 oder 2, **dadurch gekennzeichnet, dass** die Längselemente (201, 202, 203 und 204) durch einen entsprechenden Eckabschnitt (1020) miteinander verbunden sind, wobei der Eckabschnitt zweiteilig ist, wobei die Teile (1021, 1022) des Eckabschnitts (1020) durch eine Schwalbenschwanzverbindung (1023) aneinander befestigbar und voneinander lösbar sind.

4. Instrument der Ansprüche 1, 2 oder 3, **dadurch gekennzeichnet, dass** die Gitterstruktur (205) einen Wulst (1412) umfasst, der entlang des Umfangs der Gitterstruktur (205) verläuft, wobei die Längselemente (201, 202, 203 und 204) und die Eckabschnitte (1020) eine Nut (1030) aufweisen, die den Wulst (1412) aufnimmt, und die Längselemente (201, 202, 203 und 204) Arretierelemente (1405) aufweisen, die den Wulst (1412) in der Nut (1030) festhalten.

5. Instrument nach einem der vorangehenden Ansprüche, **dadurch gekennzeichnet, dass** die Gitterstruktur (205) als ein aus Kett- und Schussfäden bestehendes Netzt ausgebildet ist.

6. Instrument nach einem der vorangehenden Ansprüche, **dadurch gekennzeichnet, dass** die Oberfläche der Gitterstruktur (205) glatt ist.

7. Instrument nach einem der vorangehenden Ansprüche, **dadurch gekennzeichnet, dass** die Gitterstruktur (205) ein magnetisches Material umfasst.

8. Instrument nach Anspruch 7, **dadurch gekennzeichnet, dass** es mindestens eine Magnetschablone zum Anbringen an der magnetischen Gitterstruktur (205) umfasst.

9. Instrument nach einem der vorangehenden Ansprüche, **dadurch gekennzeichnet, dass** die Oberfläche des Gitters z.B. mit Filzstift, Tintenstift oder Bleistift beschreibbar ist.

## Revendications

1. Outil (200) pour transférer des positions de références de mesure d'un cadre de construction à un revêtement de surface (501) afin de réaliser des découpes dans le revêtement de surface (501) pour lesdites références de mesure ; ledit outil comprenant une structure analogue à un cadre et une structure de grille (205) ayant des ouvertures selon un motif tramé ; ladite structure de grille (205) s'étendant entre des éléments (201, 202, 203 et 204) de la structure analogue à un cadre, **caractérisé en ce que** ladite structure analogue à un cadre comprend des éléments allongés (201, 202, 203 et 204) qui peuvent être fixés et détachés à la main les uns aux autres au niveau des angles (333) de ladite structure analogue à un cadre, **en ce que** ladite structure de grille (205) peut être fixée à et détachée à la main de ladite structure analogue à un cadre, et **en ce que** ladite structure de grille (205) est souple à un point tel qu'elle peut être enroulée à la main.

2. Outil selon la revendication 1, **caractérisé en ce que** ladite structure de grille (205) est fixée de manière amovible à ladite structure analogue à un cadre par des clips, des pinces, des crochets, des chevilles, magnétisme, friction, des crochets et des boucles, comme du Velcro®, un mécanisme de fermeture, comme une fermeture éclair ou un adhésif.

3. Outil selon les revendications 1 ou 2, **caractérisé en ce que** lesdits éléments longitudinaux (201, 202, 203 et 204) sont couplés les uns aux autres par une section d'angle respective (1020), ladite section d'angle étant en deux parties, lesdites parties (1021, 1022) de ladite section d'angle (1020) pouvant être fixées l'une à l'autre et détachées l'une de l'autre par un joint en queue d'aronde (1023).

4. Outil selon les revendications 1, 2 ou 3, **caractérisé en ce que** ladite structure de grille (205) comprend un bourrelet (1412) s'étendant le long de la circonférence de ladite structure de grille (205), lesdits éléments longitudinaux (201, 202, 203 et 204) et lesdites sections d'angle (1020) ayant une rainure (1030) recevant ledit bourrelet (1412), et lesdits éléments longitudinaux (201, 202, 203 et 204) ayant des éléments de verrouillage (1405) retenant ledit bourrelet (1412) à l'intérieur de ladite rainure (1030).

5. Outil selon l'une quelconque des revendications précédentes, **caractérisé en ce que** ladite structure de grille (205) est un filet comprenant des fils de chaîne et de trame.

6. Outil selon l'une quelconque des revendications précédentes, **caractérisé en ce que** la surface de la structure de grille (205) est lisse.

7. Outil selon l'une quelconque des revendications précédentes, **caractérisé en ce que** ladite structure de grille (205) comprend un matériau magnétique.

8. Outil selon la revendication 7, **caractérisé en ce qu'**il comprend au moins un modèle d'aimant à fixer sur ladite structure de grille magnétique (205).

9. Outil selon l'une quelconque des revendications précédentes, **caractérisé en ce que** la surface de la grille est inscriptible par exemple feutre, stylo à encre ou crayon.
